# EUROPÄISCHE PATENTSCHRIFT

(11) **EP 3 954 107 B1**
(45) Veröffentlichungstag und Bekanntmachung des Hinweises auf die Patenterteilung: **18.02.2026**
(21) Anmeldenummer: 19717858.5
(22) Anmeldetag: 11.04.2019
(51) Int. Cl.: H04M 1/05, F16M 13/04, F16M 11/04, F16M 11/28, F16M 11/20, F16M 11/14

(54) **VERSTELLBARE UND TRAGBARE HALTEVORRICHTUNG FÜR EIN ENDGERÄT**
ADJUSTABLE AND WEARABLE HOLDING DEVICE FOR A TERMINAL DEVICE
DISPOSITIF DE SUPPORT AJUSTABLE ET PORTABLE POUR UN DISPOSITIF TERMINAL

(43) Veröffentlichungstag der Anmeldung: 16.02.2022
(73) Patentinhaber: Balzer, Miriana, 25712 Burg (Dithmarschen) (DE)
(72) Erfinder: Balzer, Miriana, 25712 Burg (Dithmarschen) (DE)
(74) Vertreter: Andresen, Heiko
(86) Internationale Anmeldenummer: PCT/EP2019/059276
(87) Internationale Veröffentlichungsnummer: WO 2020/207589

(56) Entgegenhaltungen:
- GB-A- 1 568 120
- US-A1- 2015 354 753
- US-B1- 6 764 231

## Beschreibung

### GEBIET DER ERFINDUNG

Die Erfindung betrifft eine Haltevorrichtung 5 für ein Endgerät.

### TECHNISCHER HINTERGRUND

Für die Kommunikation werden heutzutage vielfach Endgeräte, insbesondere mobile Endgeräte, wie z.B. Mobiltelefone, Tablets oder ähnliche Vorrichtungen verwendet. Dabei wird das Endgerät in der Regel innerhalb eines bestimmten Bereichs des Umfelds eines Menschen (üblicherweise des Umfelds des Kopfes) positioniert, um eine sinnvolle Wiedergabe und/oder Aufnahme von Informationen zu ermöglichen. Möchte der Nutzer diese Informationen visuell wahrnehmen, so muss das Endgerät im zugänglichen Sichtfeld des Nutzers platzierbar sein. Andererseits kann es die Aufnahme von Informationen, z.B. das Erstellen einer Fotografie, gerade erfordern, dass die Position des Endgeräts relativ zum Nutzer gegenüber einer typischen "Anzeigeposition" veränderbar ist.

Aus US 2015/354753 A1 ist eine verstellbare Haltevorrichtung für Medien bekannt, die freihändig verwendet werden kann und zum Halten von Medien verschiedener Größen und Konfigurationen vor dem Benutzer dient.

US 6,764,231 B1 offenbart Kamerahalterungen, die einem Fotografen dabei helfen, eine Kamera während der Verwendung ruhig zu halten, ohne die Bewegungsfreiheit des Fotografen oder der Kamera übermäßig einzuschränken.

Gemäß einigen Lösungen des Stands der Technik muss der Nutzer das Endgerät für die Positionierung und Orientierung des Endgeräts mit zumindest einer Extremität (Arme, Beine) in seiner Position halten. Dadurch ist der Nutzer in seiner Bewegungsfreiheit eingeschränkt.

Zudem können die Lösungen des Stands der Technik eine Positionstreue des Endgeräts nur unzureichend gewährleisten, insbesondere wenn sich der Nutzer zusätzlich bewegt, z.B. sportlich betätigt. In diesem Fall muss das Endgerät unter Einwirkung des Nutzers nachgeführt werden. Dadurch ist der Nutzer noch stärker in seiner Bewegungsfreiheit eingeschränkt.

### ZUSAMMENFASSUNG

Es ist eine Aufgabe der Erfindung die Nachteile der bekannten Haltevorrichtungen auszuräumen oder zumindest zu verringern. Insbesondere ist es eine Aufgabe der Erfindung, ein Endgerät derart positionieren und orientieren zu können, dass die Bewegungsfreiheit eines Menschen (Nutzers, Trägers der Haltevorrichtung) erhöht wird und/oder die Position und Orientierung eines Endgeräts relativ zum Menschen trotz einer Bewegung des Menschen im Wesentlichen konstant bleibt.

Die Aufgabe wird erfindungsgemäß durch den Gegenstand des unabhängigen Patentanspruchs gelöst.

Es wird unter anderem eine Haltevorrichtung für ein Endgerät bereitgestellt. Das Endgerät kann ein mobiles Endgerät, ein Mobiltelefon, ein Tabletcomputer, ein persönlicher digitaler Assistent, ein Taschencomputer, ein mobiles Datenerfassungsgerät, oder ein Navigationsgerät sein.

Die Haltevorrichtung ist derart ausgebildet, um von einem Menschen getragen werden zu können. Die Haltevorrichtung umfasst eine erste Komponente. Die erste Komponente kann ein Bügel bzw. ein Bügelgestell sein. Die erste Komponente weist eine Form derart auf, dass die erste Komponente durch Schultern und/oder Nacken und einen vorderen Thoraxbereich (Oberkörperbereich) abstützbar ist. Die erste Komponente kann eine gebogene Form aufweisen. Die Haltevorrichtung umfasst ferner eine mit der ersten Komponente verbundene zweite Komponente. Die zweite Komponente ist zur Aufnahme (zum Halten) eines Endgeräts eingerichtet. Die Haltevorrichtung umfasst ferner eine Ausrichtungsfunktionalität. Die Ausrichtungsfunktionalität ist derart eingerichtet, dass das von der zweiten Komponente aufgenommene Endgerät gegenüber der ersten Komponente innerhalb eines vorbestimmten Raumvolumens im Wesentlichen frei orientierbar und positionierbar ist. Die so ausgebildete Haltevorrichtung ermöglicht es, die Orientierung und Positionierung des Endgeräts relativ zum Nutzer innerhalb des Raumvolumens für jeden Anwendungsfall passend zu gestalten. Ferner ermöglicht die Haltevorrichtung die im Wesentlichen freie Orientierung und Positionierung des Endgeräts, ohne dabei ein Mitwirken des Nutzers durch eine seiner Extremitäten (Arme, Beine) zu erfordern.

Die erste Komponente umfasst einen Thoraxabschnitt. Zudem umfasst die Ausrichtungsfunktionalität ein erstes Kugelgelenk. Die zweite Komponente ist mittels des ersten Kugelgelenks mit dem Thoraxabschnitt der ersten Komponente gekoppelt. Das erste Kugelgelenk kann feststellbar sein. Die so ausgebildete Haltevorrichtung ermöglicht es, die Positionierung und Orientierung des Endgeräts gegenüber dem Thoraxabschnitt der ersten Komponente durch das erste Kugelgelenk vorteilhaft zu verbessern.

Die erste Komponente kann verformbar sein, so dass ihre Form der individuellen Form des Menschen noch angepasst werden kann. Die erste Komponente kann auch im Wesentlichen starr sein. Insbesondere kann die erste Komponente derart starr sein, dass sie im Wesentlichen nicht verformbar ist (zumindest nicht im Rahmen der üblichen Kraftausübung durch einen Menschen).

Die Ausrichtungsfunktionalität umfasst ein zweites Kugelgelenk. Das zweite Kugelgelenk ist derart ausgebildet sein, dass eine Orientierung des von der zweiten Komponente aufgenommenen Endgeräts gegenüber der zweiten Komponente variabel ist. Die Haltevorrichtung kann ein Klemmteil umfassen, mittels dem das Endgerät gehalten wird. Die Orientierung des Klemmteils kann mittels des zweiten Kugelgelenks gegenüber der zweiten Komponente variabel sein. Das zweite Kugelgelenk kann feststellbar sein. Die so ausgebildete Haltevorrichtung weist eine Kombination von zwei Kugelgelenken auf, so dass die Positionierung und Orientierung des Endgeräts vorteilhaft weiter verbessert werden kann. Dabei ermöglichen es die zusammenwirkenden Kugelgelenke die Positionierung und Orientierung des Endgeräts vorteilhaft im Wesentlichen unabhängig voneinander festzulegen.

Das erste und/oder das zweite Kugelgelenk können fernsteuerbar sein.

Die Ausrichtungsfunktionalität umfasst eine Teleskopstange. Die Teleskopstange ist eingerichtet, eine Position des von der zweiten Komponente aufgenommenen Endgeräts relativ zur ersten Komponente zu verändern. Die Teleskopstange kann eine Längenverstellung umfassen. Die Längenverstellung der Teleskopstange kann feststellbar sein. Dazu kann die Teleskopstange einen Rastmechanismus umfassen. Die so ausgebildete Haltevorrichtung ermöglicht es, die Positionierung und Orientierung des Endgeräts vorteilhaft weiter zu verbessern. Die Teleskopstange stellt zumindest eine translatorische Bewegung bereit, mittels der der Abstand des von der zweiten Komponente gehaltenen Endgeräts gegenüber der ersten Komponente veränderbar ist.

Gemäß einem weiteren vorteilhaften Aspekt kann die Teleskopstange nur (einzig) einen translatorischen Freiheitsgrad aufweisen. Die Teleskopstange kann eingerichtet sein, um nur entlang diesem (einzigen) translatorischen Freiheitsgrad entsprechend anpassbar zu sein. Die Teleskopstange stellt demgemäß vorteilhaft nicht noch zusätzliche rotatorische Freiheitsgrade bereit (zusätzlich zu denjenigen, die aus den eventuell vorhandenen Kugelgelenken herrühren). Dadurch weist die Haltevorrichtung vorteilhaft eine verbesserte kinematische Kette auf, so dass die Positionierung und Orientierung des Endgeräts vorteilhaft eine verbesserte Bestimmtheit aufweisen.

Die Teleskopstange kann auch einen elektrischen und/oder pneumatischen und/oder hydraulischen Antrieb umfassen.

Gemäß einem weiteren vorteilhaften Aspekt kann das erste Kugelgelenk zumindest teilweise von einem drehbaren Gehäuseteil eingefasst sein. Das Gehäuseteil kann einen Ausschnitt aufweisen. Der Ausschnitt des Gehäuseteils kann eingerichtet sein, um eine Stellung der Teleskopstange mittels des Ausschnitts des Gehäuseteils festzustellen. Eine Position des drehbaren Gehäuseteils kann feststellbar sein. Das bedeutet, dass der Drehwinkel des drehbaren Gehäuseteils feststellbar sein kann. Ist die Teleskopstange derart orientiert, dass sie fluchtend mit dem Ausschnitt des Gehäuseteils übereinstimmt, so kann durch das Feststellen des Gehäuseteils auch die Orientierung der Teleskopstange feststellbar sein. Das erste Kugelgelenk und/oder die Position (der Drehwinkel) des drehbaren Gehäuseteils und/oder die Orientierung der Teleskopstange können mittels eines einzigen Sicherungsmittels feststellbar sein. Das Sicherungsmittel kann beispielsweise eine Flügelschraube sein. Die Flügelschraube kann am Gehäuseteil des ersten Kugelgelenks angeordnet sein. Die so ausgebildete Haltevorrichtung weist vorteilhaft eine verbesserte kinematische Kette auf, so dass die Positionierung und Orientierung des Endgeräts vorteilhaft eine verbesserte Bestimmtheit aufweisen.

Die erste Komponente umfasst den Thoraxabschnitt und einen Nackenabschnitt. Die Haltevorrichtung umfasst zudem einen Thoraxabstützpunkt, an dem der Thoraxabschnitt auf dem vorderen Thoraxbereich (vorderen Brustbereich) des Nutzers aufliegt. Die Haltevorrichtung kann dann einen Längenadaptionsmechanismus umfassen. Der Längenadaptionsmechanismus kann derart sein, dass ein Abstand zwischen dem Nackenabschnitt und dem Thoraxabstützpunkt variabel ist. Die so ausgebildete Haltevorrichtung weist vorteilhaft eine verbesserte Anpassbarkeit an den jeweiligen Körperbau des Nutzers auf. Dadurch stellt die derartig ausgebildete Haltevorrichtung vorteilhaft einen verbesserten Tragekomfort bereit.

Der Nackenabschnitt kann ein Nackenbügel sein.

Gemäß einem weiteren vorteilhaften Aspekt kann der Längenadaptionsmechanismus zumindest ein erstes und ein zweites Teilelement der ersten Komponente umfassen. Die Kombinationslänge des ersten und des zweiten Teilelements der ersten Komponente kann veränderbar sein. Die Kombinationslänge kann durch einen Rastmechanismus feststellbar sein. Das erste und das zweite Teilelement der ersten Komponente können zumindest formschlüssig miteinander verbunden sein. Die so ausgebildete Haltevorrichtung stellt einen mechanisch einfachen, aber robusten Adaptionsmechanismus bereit, um die Länge der ersten Komponente (d.h. den Abstand zwischen Thoraxabstützpunkt und Nackenabschnitt) vorteilhaft an den Körperbau des Menschen anzupassen.

Die erste Komponente umfasst den Thoraxabschnitt, den Nackenabschnitt und einen Schulterabschnitt. Der Längenadaptionsmechanismus kann in einem vom Schulterabschnitt und dem Thoraxabschnitt der ersten Komponente ausgebildet sein. Die Haltevorrichtung kann einen zusätzlichen Längenadaptionsmechanismus umfassen, der in dem anderen vom Schulterabschnitt und dem Thoraxabschnitt der ersten Komponente ausgebildet sein kann. Die so ausgebildete Haltevorrichtung kann vorteilhaft zwei Längenadaptionsmechanismen umfassen, so dass die Adaptionsfähigkeit der Haltevorrichtung in Bezug auf den Körperbau des Nutzers vorteilhaft weiter verbessert wird.

Jeder einzelne oder alle Längenadaptionsmechanismus/-men kann/können auch einen elektrischen und/oder pneumatischen und/oder hydraulischen Antrieb umfassen.

Die erste Komponente umfasst den Thoraxabschnitt und den Nackenabschnitt. Die Haltevorrichtung umfasst zumindest einen Brustgurt. Der Brustgurt kann abnehmbar sein. Ein erstes Ende des Brustgurts ist mit dem Nackenabschnitt der ersten Komponente koppelbar. Ein zweites Ende des Brustgurts ist mit dem Thoraxabschnitt der ersten Komponente koppelbar. Die Kopplung des ersten und zweiten Endes des Brustgurts an der ersten Komponente kann jeweils mittels eines Rastmechanismus ausgebildet sein. Der Brustgurt kann ausgebildet sein, eine im Wesentlichen stabile Position der Haltevorrichtung relativ zum Thorax eines Menschen zu gewährleisten. Die so ausgebildete Haltevorrichtung ermöglicht es vorteilhaft, dass die relative Position des Endgeräts zum Thoraxabschnitt im Wesentlichen konstant bleibt, obwohl sich der Nutzer bewegen kann, z.B. sportlich aktiv sein kann. Die Haltevorrichtung weist deshalb vorteilhaft eine verbesserte Positionstreue des Endgeräts auf.

Der Brustgurt kann vom Nackenabschnitt unter dem Schultergelenk hindurch zum Thoraxabschnitt und/oder dem Abstützelement geführt sein. Es kann auch ein Paar an Brustgurten geben, so dass unter jedem Schultergelenk (unter jeder Achselhöhle hindurch) jeweils ein Brustgurt geführt wird. Die Mehrzahl an Brustgurten können sich auch im vorderen Thoraxbereich des Menschen und/oder im hinteren Thoraxbereich und/oder im Nackenbereich des Menschen überkreuzen. Dadurch kann die Positionstreue weiter verbessert werden.

Der Brustgurt kann ein Textilelement und/oder ein Kunststoffelement (Gummiband, Elastikband) umfassen. Der Brustgurt kann zumindest einen Teil umfassen, der eine Elastizität aufweist. Der Brustgurt kann sich also an eine Körperkontur des Nutzers anpassen. Durch die Elastizität wird die Positionstreue und/oder Orientierungstreue der Haltevorrichtung vorteilhaft verbessert.

Gemäß einem weiteren vorteilhaften Aspekt kann die Haltevorrichtung Mittel zur Geräuschwiedergabe (Lautsprecher, Ohrhörer, Ohrstecker) und/oder Bildwiedergabe (Display) und/oder Geräuschaufnahme (Mikrofon) und/oder Bildaufnahme (Fotokamera, Videokamera) umfassen. Derartige Mittel können mit dem Endgerät koppelbar und/oder verbindbar sein. Die so ausgebildete Haltevorrichtung stellt vorteilhaft eine erhöhte Funktionalität bereit. Beispielsweise kann die Haltevorrichtung integrierte Kopfhörer umfassen, so dass dem Nutzer eine verbesserte Akustik mit eventuell unterdrückten Umgebungsgeräuschen bereitgestellt wird.

Gemäß einem weiteren vorteilhaften Aspekt kann die Haltevorrichtung einen Energiespeicher umfassen. Der Energiespeicher kann an der Haltevorrichtung befestigt sein. Die Haltevorrichtung kann so ausgebildet sein, dass der Energiespeicher mit dem Endgerät koppelbar und/oder verbindbar ist. Der Energiespeicher kann in der ersten Komponente integriert sein und/oder an dieser angeordnet sein. Die so ausgebildete Haltevorrichtung ermöglicht es, mittels des Energiespeichers einen Ladezustand des Endgeräts vorteilhaft zu erhöhen.

Gemäß einem weiteren vorteilhaften Aspekt kann die erste Komponente und/oder zweite Komponente zumindest teilweise eine im Wesentlichen elastische und/oder anti-allergene Beschichtung aufweisen. Die so ausgebildete Haltevorrichtung ermöglicht es, den Tragekomfort vorteilhaft zu erhöhen und/oder das Risiko eine Allergie auszulösen vorteilhaft zu verringern. Die erste und/oder zweite Komponente kann zumindest abschnittsweise auch eine Polsterung umfassen. Die Polsterung kann aus Schaumstoff und/oder Kaltschaum und/oder Temperfoam und/oder Leder und/oder Stoff und/oder Alcantara umfassen. Die Polsterung kann innenliegende Magnete umfassen. Die Magnete können geeignet sein, die Polsterung an einem Teil der ersten und/oder zweiten Komponente anzubringen.

Gemäß einem weiteren vorteilhaften Aspekt kann zumindest ein Teil (Abschnitt, Teilkomponente) der ersten Komponente und/oder der zweiten Komponente aus einem metallischen Material und/oder Aluminium und/oder Carbon und/oder einem Biokunststoff und/oder einem Kunststoff gefertigt sein. Die so ausgebildete Haltevorrichtung ermöglicht es vorteilhafterweise, die Stabilität der Haltevorrichtung zu erhöhen und/oder das das Gewicht zu verringern.

Gemäß einem weiteren vorteilhaften Aspekt kann die Haltevorrichtung eine Stativfunktionalität umfassen. Die Stativfunktionalität kann durch eine geeignete Form der ersten Komponente bereitgestellt werden. Die Form der ersten Komponente kann derart sein, dass die Stativfunktionalität für eine auf einem im Wesentlichen horizontal ausgebildeten Untergrund platzierte Haltevorrichtung gewährleistet ist. Die so ausgebildete Haltevorrichtung stellt eine erhöhte Funktionalität bereit. Beispielsweise kann durch die Platzierung auf einem Tisch vorteilhaft eine sichere Anordnung des Endgeräts gewährleistet werden. Zudem können dann vorteilhaft mehr als nur ein Nutzer mit dem Endgerät interagieren.

Gemäß weiteren vorteilhaften Aspekten kann die zweite Komponente einen Schwanenhals umfassen.

Der Thoraxabschnitt der ersten Komponente kann auch ein Abstützelement umfassen. Das Abstützelement kann im Wesentlichen eine Auflagefläche bereitstellen, mittels dem die erste Komponente auf dem vorderen Thoraxbereich (vorderen Brustbereich) des Nutzers aufliegt. Die Auflagefläche des Abstützelements kann den Thoraxabstützpunkt umfassen.

Die zweite Komponente kann im Wesentlichen das erste Kugelgelenk , die Teleskopstange, das zweite Kugelgelenk und das Klemmteil umfassen.

Die Ausrichtungsfunktionalität kann das erste Kugelgelenk, die Teleskopstange, das zweite Kugelgelenk und den drehbaren Gehäuseteil des ersten Kugelgelenks und den Brustgurt umfassen. Das Endgerät kann mittels der vorstehend genannten Komponenten natürlich auch derart orientiert und positioniert werden, dass es gerade nicht im Sichtbereich des Menschen ist, sondern z.B. auf einer Schulter aufliegt.

Die Haltevorrichtung kann auch auf dem Rücken getragen werden. Sie kann also auch umgekehrt angelegt und getragen werden. In diesem Fall kann die Haltevorrichtung auf einem oberen Rückenbereich des Trägers aufliegen (im Wesentlichen auf den Schulterblättern und einem dazwischen befindlichen Bereich des Rücken).

Im Kontext dieser Anmeldung ist mit "feststellbar" oder "fixierbar" gemeint, dass die entsprechenden Bauteile eine solch große Hemmung und/oder Reibung aufweisen, dass sie ihre Ausrichtung im festgestellten oder fixierten Zustand im Wesentlichen beibehalten können und/oder diese nur ändern können, falls ein erheblicher Kraftaufwand zur Veränderung geleistet wird. Die Feststellung oder Fixierung der Bauteile ermöglicht es deshalb vorteilhafterweise, das Endgerät präziser auf die primäre Körperhaltung und/oder die Sichtrichtung des Nutzers und/oder innerhalb des Sichtfelds des Nutzers auszurichten und eine Positionstreue und/oder Orientierungstreue der so eingestellten Position und/oder Orientierung bereitzustellen.

Im Kontext dieser Anmeldung kann mit dem vorderen Thoraxbereich (vorderen Oberkörperbereich) der nach vorne gerichtete Bereich des Thorax eines Menschen gemeint sein, insbesondere einschließend die Brust, das Brustbein, den Brustkorb und die Bauchdecke. Mit den Schultern kann der seitlich, an den Hals eines Menschen angrenzende Bereich oberhalb der Schlüsselbeine gemeint sein. Mit dem Nacken kann der rückwärtige Bereich des Thorax insbesondere im Bereich des Halsansatzes gemeint sein.

### KURZE BESCHREIBUNG DER ZEICHNUNGEN

- Fig. 1 eine vereinfachte schematische Darstellung der Haltevorrichtung gemäß einer Ausführungsform in einer Seitenansicht,
- Fig. 2 eine vereinfachte schematische Darstellung der Haltevorrichtung gemäß einer Ausführungsform in einer Frontansicht,
- Fig. 3 eine vereinfachte schematische Darstellung des ersten Kugelgelenks im Gehäuse.

### DETAILLIERTE BESCHREIBUNG DER AUSFÜHRUNGSBEISPIELE

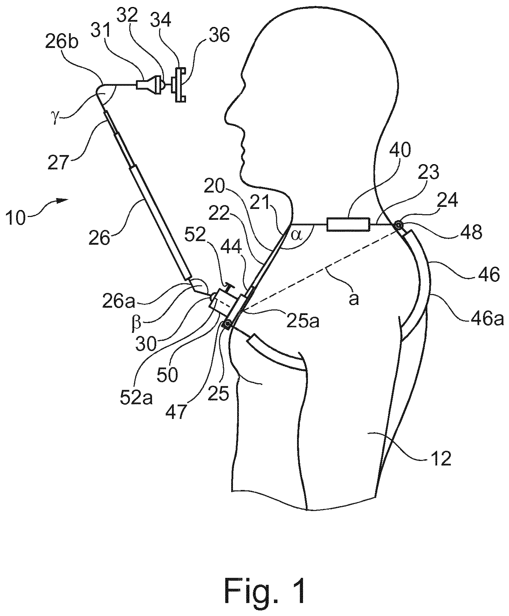

Figur 1 zeigt eine vereinfachte schematische Darstellung der Haltevorrichtung 10 gemäß einer Ausführungsform in einer Seitenansicht. Die Haltevorrichtung 10 wird von einem Menschen 12, der hier durch einen Teil seines Torsos dargestellt ist, getragen.

Die Haltevorrichtung 10 umfasst eine erste Komponente 20. Die erste Komponente 20 umfasst einen Bügel bzw. ein Gestell 21. Die erste Komponente 20 umfasst einen Thoraxabschnitt 22, einen Schulterabschnitt 23 und einen Nackenabschnitt 24. Die erste Komponente 20 umfasst an der Verbindungsstelle zwischen dem Thoraxabschnitt 22 und dem Schulterabschnitt 23 einen Winkel α. Der von dem Thoraxabschnitt 22 und dem Schulterabschnitt 23 eingeschlossene Winkel α beträgt vorzugsweise mehr als 70 Grad und weniger als 170 Grad, weiter vorzugsweise mehr als 110 Grad und weniger als 150 Grad. Weiter vorzugsweise beträgt der eingeschlossene Winkel α im Wesentlichen (135 ± 10) Grad. Die erste Komponente 20 umfasst ein Abstützelement 25. Soweit die Haltevorrichtung 10 von einem Menschen 12 getragen wird, umschließt die erste Komponente 20 den unteren Hals- bzw. Nackenbereich des Menschen 12. Das Abstützelement 25 kann integral mit dem Thoraxabschnitt 22 sein. Der Thoraxabschnitt 22 kann auch separat von dem Abstützelement 25 sein und lediglich in geeigneter Weise daran befestigt sein. Vom Abstützelement 25 ausgehend umfasst der Thoraxabschnitt 22 zwei zunächst im Wesentlichen parallel verlaufende Teilstücke. Mit steigendem Abstand vom Abstützelement 25 vergrößert sich der Abstand der Teilstücke hin zum Übergang zwischen dem Thoraxabschnitt 22 und dem Schulterabschnitt 23. Der Thoraxabschnitt 22 kann im Wesentlichen auf einem vorderen Oberkörperbereich (vorderen Thoraxbereich) aufliegen oder in geringem Abstand zu diesem im Wesentlichen parallel verlaufen. Der vordere Oberkörperbereich kann die Brust und/oder das Dekolleté und/oder das Brustbein und/oder die Bauchdecke umfassen. Der Schulterabschnitt 23 ist gegenüber dem Thoraxabschnitt 22 um den Winkel α geneigt. Der Schulterabschnitt 23 umfasst, ausgehend vom Übergang zum Thoraxabschnitt 22, zwei im Wesentlichen parallel verlaufende Teilstücke, die auf den Schultern des Menschen 12 aufliegen. Anschließend an diese beiden Teilstücke des Schulterabschnitts 23, umfasst die erste Komponente 20 einen Nackenabschnitt 24. Der Nackenabschnitt 24 setzt an den beiden Teilstücken des Schulterabschnitts 23 an und vereinigt diese im Nackenbereich des Menschen 12. Der Nackenabschnitt 24 kann eine Krümmung und/oder einen Knick umfassen, um sich der Kontur der (hervorstehenden) Wirbelsäule im Nackenbereich des Menschen 12 anzupassen. Durch die erste Komponente 20 wird der Hals des Menschen 12 umschlossen. Die erste Komponente 20 kann im Wesentlichen durch einen oder mehrere Drähte und/oder einen oder mehrere Stäbe und/oder oder ein oder mehrere Rohre gebildet sein. Die Materialstärke (der Durchmesser) der ersten Komponente 20 beträgt vorzugsweise mehr als 1 mm und weniger als 30 mm, weiter vorteilhaft mehr als 4 mm und weniger als 8 mm.

Der Thoraxabschnitt 22 und/oder der Schulterabschnitt 23 und/oder der Nackenabschnitt 24 können paarweise oder insgesamt integral oder separat zueinander sein.

Die erste Komponente 20 umfasst ferner einen ersten Längenadaptionsmechanismus 40 und einen zweiten Längenadaptionsmechanismus 44. Der erste Längenadaptionsmechanismus 40 ist im Schulterabschnitt 23 der ersten Komponente 20 angeordnet. Der zweite Längenadaptionsmechanismus 44 ist im Thoraxabschnitt 22 der ersten Komponente 20 angeordnet. Der erste Längenadaptionsmechanismus 40 und der zweite Längenadaptionsmechanismus 44 sind im Wesentlichen gleich ausgelegt. Ein Längenadaptionsmechanismus 40, 44 umfasst ein erstes Teilelement und ein zweites Teilelement. Die Teilelemente können formschlüssig verbunden sein. Beispielsweise können die Teilelemente durch zwei ineinanderlaufende Hohlröhren gebildet sein. Die Teilelemente sind rastweise gegeneinander verschieblich, so dass eine durch das erste und zweite Teilelement bestimmte Gesamtlänge des jeweiligen Längenadaptionsmechanismus 40, 44 veränderlich ist.

Die erste Komponente 20 umfasst einen Thoraxauflagepunkt 25a, der Teil des Abstützelements 25 ist. Am Thoraxauflagepunkt 25a liegt der Thoraxabschnitt 22 und/oder das Abstützelement 25 auf dem vorderen Oberkörperbereich des Menschen 12 auf. Die erste Komponente 20 umfasst einen Abstand a zwischen dem Thoraxauflagepunkt 25a und dem Nackenabschnitt 24. Der Abstand a ist mittels des ersten Längenadaptionsmechanismus 40 und des zweiten Längenadaptionsmechanismus 44 veränderlich. Somit ist die erste Komponente 20 mittels des ersten Längenadaptionsmechanismus 40 und des zweiten Längenadaptionsmechanismus 44 an die Körperform (Körperkontur) des Menschen 12 anpassbar.

Die Haltevorrichtung 10 umfasst zumindest einen Brustgurt 46. Der Brustgurt 46 umfasst ein Teilstück 46a. Das Teilstück 46a umfasst ein elastisches Material (z.B. einem Gummiband). Ein erstes Ende 47 des Brustgurts 46 ist an dem Thoraxabschnitt 22 und/oder dem Abstützelement 25 befestigt. Ein zweites Ende 48 des Brustgurts 46 ist an dem Nackenschnitt 24 befestigt. Das erste und zweite Ende 47, 48 des Brustgurts 46 sind jeweils mittels einer Rastverbindung an der ersten Komponente 20 befestigt. Deshalb kann der Brustgurt 46 abnehmbar sein. Der Brustgurt 46 wird unter dem Oberarm des Menschen 12 hindurchgeführt. Die Elastizität des Materials des Teilstücks 46a sorgt dann für eine hohe Positionstreue (Positionsstabilität) der ersten Komponente 20, insbesondere des Abstützelements 25 und/oder des Thoraxabschnitts 22, gegenüber dem Rumpf des Menschen 12. Die Positionstreue wird durch den Brustgurt 46 sogar gewährleistet, wenn sich der Mensch 12 bewegt z.B. sportlich betätigt.

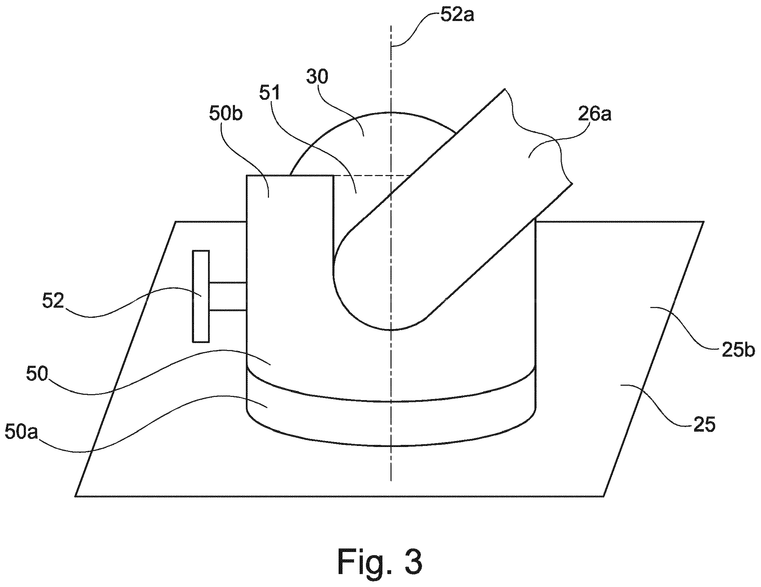

An dem Abstützelement 25 ist ein Gehäuse 50 befestigt. Das Gehäuse 50 umschließt ein erstes Kugelgelenk 30 zumindest teilweise. An dem ersten Kugelgelenk 30 ist eine Teleskopstange 26 befestigt. Das erste Kugelgelenk 30 ist eingerichtet, um eine Orientierung und/oder eine Position der Teleskopstange 26 relativ zum Abstützelement 25 zu ändern. Das Gehäuse 50 umfasst ein Feststellmittel 52, z.B. eine Flügelschraube. Das Gehäuse 50 umfasst ein Gehäuseteil 50b (siehe Fig. 3), das drehbar entlang seiner Längserstreckungsachse ist. Das bedeutet, dass die Rotationsachse der möglichen Drehung des Gehäuseteils 50b senkrecht auf der Hauptoberfläche des Abstützelements 25 orientiert ist. In Figur 1 ist die Rotationsachse des Gehäuseteils 50b mit einer Strich-Punktlinie 52a angedeutet. Das erste Kugelgelenk 30 ist innerhalb des Gehäuses 50 um drei rotatorische Freiheitsgrade drehbar, soweit es das Gehäuse 50 zulässt (siehe auch Figur 3 und die dortige Beschreibung). Sowohl die Stellung des ersten Kugelgelenks 30 als auch die Orientierung des Gehäuseteils 50b sind mittels des Feststellmittels 50 feststellbar bzw. fixierbar.

Die Teleskopstange 26 umfasst eine veränderliche Länge. Die veränderliche Länge wird durch Ausziehelemente 27 bereitgestellt. Die Teleskopstange 26 umfasst einen einzelnen translatorischen Freiheitsgrad, der der Längsachse der Teleskopstange 26 entspricht. Die Gesamtlänge der Teleskopstange 26 ist mittels der Ausziehelemente 27 entlang der Längsachse veränderlich. Die Teleskopstange 26 umfasst einen Rastmechanismus, um die Gesamtlänge festzustellen (zu fixieren). Die Teleskopstange 26 umfasst zudem an dem dem ersten Kugelgelenk 30 zugewandten Ende ein erstes Teilstück 26a und an dem gegenüberliegenden Ende ein zweites Teilstück 26b. Das erste Teilstück 26a weist einen Knick bzw. eine Krümmung auf, die einen Winkel β einschließt. Der eingeschlossene Winkel β beträgt vorzugsweise mehr als 70 Grad und weniger als 170 Grad, weiter vorzugsweise mehr als 110 Grad und weniger als 150 Grad. Weiter vorzugsweise beträgt der eingeschlossene Winkel β im Wesentlichen (135 ± 10) Grad. Das zweite Teilstück 26b weist einen Knick bzw. eine Krümmung auf, die einen Winkel γ einschließt. Der eingeschlossene Winkel γ beträgt vorzugsweise mehr als 10 Grad und weniger als 90 Grad, weiter vorzugsweise mehr als 30 Grad und weniger als 60 Grad. Weiter vorzugsweise beträgt der eingeschlossene Winkel γ im Wesentlichen (45 ± 10) Grad. Die Teilstücke 26a und 26b und ihre Abbiegungen sind jeweils optional. Die Teleskopstange 26 kann auch ohne die Teilstücke 26a, 26b ausgebildet sein.

Die Teleskopstange 26 umfasst ferner an dem Ende, dass dem Abstützelement 25 gegenüberliegt, eine Einfassung 31. Von der Einfassung 31 wird ein zweites Kugelgelenk 32 zumindest teilweise umfasst. An dem zweiten Kugelgelenk 32 ist ein Klemmteil 34 montiert, das das Endgerät 36 hält. Die Orientierung und/oder Position des Klemmteils 34 ist mittels des zweiten Kugelgelenks 32 relativ zur Teleskopstange 26 veränderlich. Ferner sind die Orientierung und die Position des Klemmteils 34 mittels des ersten Kugelgelenks 30, der Teleskopstange 26 und des zweiten Kugelgelenks 32 relativ zum Abstützelement 25 und/oder Thoraxabschnitt 22, und damit zum Menschen 12, veränderlich. Die Stellung des zweiten Kugelgelenks 32 ist mittels der Einfassung 31 feststellbar bzw. fixierbar. Die Einfassung 31 kann zu diesem Zweck z.B. eine Quetschsicherung vorsehen.

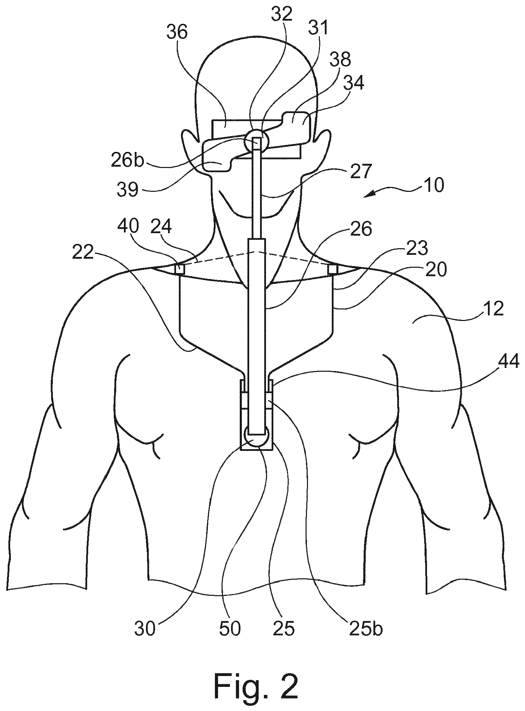

Das Klemmteil 34 ist ausgebildet, um das Endgerät 36 im Wesentlichen festzuklemmen, so dass das Endgerät 36 nicht ohne erheblichen Kraftaufwand vom Klemmteil 34 entfernbar ist. Die Klemmung kann auf einem Federmechanismus und/oder das Endgerät 36 überstehenden Haltenasen 38, 39 (siehe Fig. 2) beruhen, so dass ein Formschluss durch das Klemmteil 34 und das Endgerät 36 bereitgestellt wird.

Das erste Kugelgelenk 30, die Teleskopstange 26 und das zweite Kugelgelenk 32 ermöglichen es, das Klemmteil 34 derart zu positionieren und/oder zu orientieren, dass das Endgerät 36 entsprechend dem Sichtfeld des Menschen 12 positioniert und orientiert werden kann. Somit kann durch die Haltevorrichtung 10 gewährleistet werden, dass der Mensch 12 auf vorteilhafte Weise mit dem Endgerät 36 interagieren kann, beispielsweise auf dem Bildschirm angezeigte Informationen wahrnehmen kann oder eine digitale Fotografie, die zumindest teilweise ein Selbstporträt beinhaltet, erstellen kann.

Das erste Kugelgelenk 30, die Teleskopstange 26 und das zweite Kugelgelenk 32 bilden somit ein Zwischenstück, das die Verbindung des Klemmteils 34 zum Abstützelement 25 ermöglicht. Das Zwischenstück kann zum Körper hin- und vom Körper wegklappbar sein. Das Zwischenstück kann auch um 360 Grad drehbar sein, wobei die Rotationsachse dieser Drehung im Wesentlichen senkrecht auf dem Abstützelement orientiert sein kann.

Figur 2 zeigt eine vereinfachte schematische Darstellung der Haltevorrichtung 10 gemäß einer Ausführungsform in einer Frontansicht.

In dieser Ansicht wird die Konstruktion der ersten Komponente 20 verdeutlicht. Der Thoraxabschnitt 22 weist von dem Abstützelement 25 ausgehend zwei im Wesentlichen parallel verlaufende Teilstücke auf. Der Abstand der Teilstücke weitet sich dann auf und ist anschließend im Wesentlichen gleichbleibend bis die beiden Teilstücke im Bereich des hinteren Schulterabschnitts 23 im Nackenbereich des Menschen 12 durch den Nackenabschnitt 24 vereinigt werden bzw. verbunden sind (durch die gestrichelte Linie dargestellt). Es ist aber auch denkbar, dass die erste Komponente 20 in Bezug auf ihre grundsätzliche Form von der hier gezeigten Ausgestaltung abweicht, um sich noch näher an die Körperform des Menschen 12 anzupassen. Insofern kann die erste Komponente 20 zusätzliche Biegungen aufweisen, bzw. können die Abstände der Teilstücke variieren.

In dieser Ansicht ist auch erkennbar, dass das Klemmteil 34 über Haltenasen 38, 39 verfügt, die das Endgerät 36 überragen. Die Haltenasen 38, 39 können durch einen Federmechanismus verbunden sein, so dass das Endgerät durch die Haltenasen 38, 39 eingeklemmt wird. Das Endgerät 36 kann nur dann vom Klemmteil 34 entfernbar sein, falls die Haltenasen 38, 39 durch Kraftaufwand voneinander entfernt werden. Alternativ kann das Klemmteil 34 das Endgerät 36 in anderer geeigneter Weise aufnehmen. Beispielsweise kann das Klemmteil 34 eine Saugnapfverbindung mit dem Endgerät 36 bereitstellen.

Figur 3 zeigt eine vereinfachte schematische perspektivische Darstellung des ersten Kugelgelenks 30 im Gehäuse 50. Da ist das Abstützelement 25 mit der Hauptoberfläche 25b, die von dem Menschen 12 weg orientiert (gerichtet) ist. Auf der Hauptoberfläche 25b ist das Gehäuse 50 angeordnet. Das Gehäuse 50 umfasst einen ersten Gehäuseteil 50a und einen zweiten Gehäuseteil 50b. Das Gehäuse 50 umfasst (umschließt) zumindest teilweise das erste Kugelgelenk 30. Das erste Gehäuseteil 50a ist rotations- und positionsfest auf der Hauptoberfläche 25 angeordnet. Das zweite Gehäuseteil 50b ist gegenüber dem ersten Gehäuseteil 50a drehbar bzw. rotierbar. Die Rotationsachse ist mit der Strich-Punktlinie 52a angedeutet. Das zweite Gehäuseteil 50b umfasst einen schlitzförmigen Ausschnitt 51, dessen oberes Ende mit einer gestrichelten Linie angedeutet ist. Die Breite des Ausschnitts 51 korrespondiert zum Durchmesser des ersten Teilstücks 26a der Teleskopstange 26. Das erste Kugelgelenk 30 ist derart orientierbar, dass das erste Teilstück 26a fluchtend mit dem Ausschnitt 51 übereinstimmt. Das erste Kugelgelenk 30 und das zweite Gehäuseteil 50b sind mit dem Feststellmittel 52, hier einer Flügelschraube, feststellbar bzw. fixierbar. Einerseits vergrößert der Ausschnitt 51 die von dem ersten Kugelgelenk 30 bzw. dem ersten Teilstück 26a der Teleskopstange erreichbare Menge verschiedener Orientierungen. Andererseits stellt der Ausschnitt 51 eine zusätzliche Stabilität des ersten Teilstücks 26a für den Fall des festgestellten Feststellmittels 52 bereit.

Durch das Zusammenwirken des ersten Kugelgelenks 30, des zweiten Kugelgelenks 32, der Teleskopstange 26 und des drehbaren Gehäuseteils 50b wird ein von dem Endgerät 36 erreichbares Raumvolumen definiert innerhalb dessen das Endgerät 36 im Wesentlichen frei positionier- und orientierbar ist. Dieses Raumvolumen entspricht im Wesentlichen dem Teil einer Kugelschale, wobei die Stärke der Kugelschale durch die verfügbare effektive Länge der Teleskopstange gegeben ist.

## Patentansprüche

1. Haltevorrichtung (10) für ein Endgerät (36), wobei die Haltevorrichtung (10) ausgebildet ist, um von einem Menschen (12) getragen zu werden, umfassend:
eine erste Komponente (20), wobei die erste Komponente (20) eine Form derart aufweist, dass die erste Komponente (20) durch Schultern, Nacken und einen vorderen Thoraxbereich abstützbar ist,
eine mit der ersten Komponente (20) verbundene zur Aufnahme eines Endgeräts (36) ausgebildete zweite Komponente, und
eine Ausrichtungsfunktionalität derart, dass das von der zweiten Komponente aufgenommene Endgerät (36) gegenüber der ersten Komponente (20) innerhalb eines vorbestimmten Raumvolumens frei orientierbar und positionierbar ist,
wobei die erste Komponente (20) einen Thoraxabschnitt (22), einen Schulterabschnitt (23), einen Nackenabschnitt (24) und einen Brustgurt (46) umfasst,
wobei der Thoraxabschnitt (22) einen Thoraxabstützpunkt umfasst, der dazu ausgebildet ist, auf dem vorderen Thoraxbereich aufzuliegen,
wobei ein erstes Ende (47) des Brustgurts (46) mit dem Nackenabschnitt (24) und ein zweites Ende (48) des Brustgurts (46) mit dem Thoraxabschnitt (22) koppelbar ist,
wobei die Ausrichtungsfunktionalität ein erstes Kugelgelenk (30), eine Teleskopstange (26) und ein zweites Kugelgelenk (32) umfasst, wobei die zweite Komponente mittels des ersten Kugelgelenks (30) mit dem Thoraxabschnitt (22) der ersten Komponente (20) gekoppelt ist, wobei die Position des von der zweiten Komponente aufgenommenen Endgeräts (36) mittels der Teleskopstange (26) relativ zur ersten Komponente (20) variabel ist und wobei das zweite Kugelgelenk (32) derart ausgebildet ist, dass eine Orientierung des von der zweiten Komponente aufgenommenen Endgeräts (36) gegenüber der zweiten Komponente variabel ist.

2. Haltevorrichtung (10) nach Anspruch 1, wobei die Teleskopstange (26) nur einen translatorischen Freiheitsgrad aufweist und nur diesem translatorischen Freiheitsgrad entsprechend anpassbar ist.

3. Haltevorrichtung (10) nach einem der vorhergehenden Ansprüche, wobei der Thoraxabstützpunkt auf einem vorderen Brustbereich aufliegt, und die Haltevorrichtung (10) einen Längenadaptionsmechanismus (40) umfasst derart, dass ein Abstand zwischen dem Nackenabschnitt (24) und dem Thoraxabstützpunkt variabel ist, wobei der Längenadaptionsmechanismus (40) durch zumindest ein erstes und ein zweites Teilelement der ersten Komponente (20) ausgebildet ist, deren Kombinationslänge veränderbar und durch einen Rastmechanismus feststellbar ist.

4. Haltevorrichtung (10) nach Anspruch 3, wobei der Längenadaptionsmechanismus (40) in einem von dem Schulterabschnitt (23) und dem Thoraxabschnitt (22) der ersten Komponente (20) ausgebildet ist.

5. Haltevorrichtung (10) nach einem der vorhergehenden Ansprüche, wobei der Brustgurt (46) abnehmbar ist und/oder wobei die Kopplung des ersten und zweiten Endes (47, 48) des Brustgurts (46) an der ersten Komponente (20) jeweils mittels eines Rastmechanismus ausgebildet ist.

6. Haltevorrichtung (10) nach einem der vorhergehenden Ansprüche, wobei der Brustgurt (46) ausgebildet ist, den Nackenabschnitt (24) unter einem Schultergelenk hindurch mit dem Thoraxabschnitt (22) zu verbinden.

7. Haltevorrichtung (10) nach einem der vorhergehenden Ansprüche, die ferner Mittel zur Geräuschwiedergabe und/oder Bildwiedergabe und/oder Geräuschaufnahme und/oder Bildaufnahme umfasst.

8. Haltevorrichtung (10) nach einem der vorhergehenden Ansprüche, die ferner einen Energiespeicher umfasst.

9. Haltevorrichtung (10) nach einem der vorhergehenden Ansprüche, bei der zumindest ein Abschnitt der ersten Komponente (20) eine im Wesentlichen elastische und/oder anti-allergene Beschichtung aufweist.

10. Haltevorrichtung (10) nach einem der vorhergehenden Ansprüche, bei der zumindest ein Abschnitt der ersten Komponente (20) aus einem Metall und/oder Aluminium gefertigt sind.

## Claims

1. Holding device (10) for an end device (36), wherein the holding device (10) is configured to be worn by a human (12), comprising:
a first component (20), wherein the first component (20) has a shape such that the first component (20) can be supported by the shoulders, neck and front thorax area,
a second component connected to the first component (20) and designed to hold an end device (36), and
an adjustment functionality such that the terminal device (36) held by the second component can be freely oriented and positioned relative to the first component (20) within a predetermined space,
wherein the first component (20) comprises a thorax section (22), a shoulder section (23), a neck section (24) and a chest strap (46),
wherein the thorax section (22) comprises a thorax support point configured to rest on the front thorax area,
wherein a first end (47) of the chest strap (46) is connectable to the neck section (24) and a second end (48) of the chest strap (46) is connectable to the thorax section (22),
wherein the adjustment functionality comprises a first ball joint (30), a telescopic rod (26) and a second ball joint (32), wherein the second component is coupled to the thorax section (22) of the first component (20) by means of the first ball joint (30), wherein the position of the end device (36) held by the second component is variable by means of the telescopic rod (26) relative to the first component (20), and wherein the second ball joint (32) is configured such that the orientation of the end device (36) held by the second component is variable relative to the second component.

2. Holding device (10) according to claim 1, wherein the telescopic rod (26) has only one degree of translational freedom and is only adaptable in accordance with this degree of translational freedom.

3. Holding device (10) according to one of the preceding claims, wherein the thorax support point rests on a front chest area, and the holding device (10) comprises a length adaptation mechanism (40) such that a distance between the neck section (24) and the thorax support point is variable, wherein the length adaptation mechanism (40) is formed by at least a first and a second sub-element of the first component (20), the combined length of which is variable and can be locked in place by a locking mechanism.

4. Holding device (10) according to claim 3, wherein the length adjustment mechanism (40) is formed in one of the shoulder section (23) and the thorax section (22) of the first component (20).

5. Holding device (10) according to one of the preceding claims, wherein the chest strap (46) is removable and/or wherein the coupling of the first and second ends (47, 48) of the chest strap (46) to the first component (20) is formed by means of a latching mechanism in each case.

6. Holding device (10) according to one of the preceding claims, wherein the chest strap (46) is configured to connect the neck section (24) to the thorax section (22) under a shoulder joint.

7. Holding device (10) according to one of the preceding claims, further comprising means for sound reproduction and/or image reproduction and/or sound recording and/or image recording.

8. Holding device (10) according to one of the preceding claims, further comprising an energy storage device.

9. Holding device (10) according to one of the preceding claims, wherein at least one section of the first component (20) has a substantially elastic and/or anti-allergenic coating.

10. Holding device (10) according to one of the preceding claims, wherein at least one section of the first component (20) is made of metal and/or aluminum.

## Revendications

1. Dispositif de maintien (10) pour un terminal (36), dans lequel le dispositif de maintien (10) est conçu pour être porté par un être humain (12), comprenant :
un premier composant (20), dans lequel le premier composant (20) présente une forme telle que le premier composant (20) peut être supporté par des épaules, un cou et une région thoracique antérieure,
un second composant relié au premier composant (20) et conçu pour recevoir un terminal (36), et
une fonctionnalité d'alignement telle que le terminal (36) reçu par le second composant peut être orienté et positionné librement par rapport au premier composant (20) à l'intérieur d'un volume spatial prédéterminé,
dans lequel le premier composant (20) comprend une section pour thorax (22), une section pour épaule (23), une section pour cou (24) et une sangle pour poitrine (46),
dans lequel la section pour thorax (22) comprend un point d'appui thoracique conçu pour reposer sur la région thoracique antérieure,
dans lequel une première extrémité (47) de la sangle pour poitrine (46) peut être accouplée à la section pour cou (24) et une seconde extrémité (48) de la sangle pour poitrine (46) peut être accouplée à la section pour thorax (22),
dans lequel la fonctionnalité d'alignement comprend une première articulation à rotule (30), une tige télescopique (26) et une seconde articulation à rotule (32),
dans lequel le second composant est accouplé à la section pour thorax (22) du premier composant (20) au moyen de la première articulation à rotule (30), dans lequel la position du terminal (36) reçu par le second composant est variable par rapport au premier composant (20) au moyen de la tige télescopique (26), et dans lequel la seconde articulation à rotule (32) est conçue de telle sorte qu'une orientation du terminal (36) reçu par le second composant est variable par rapport au second composant.

2. Dispositif de maintien (10) selon la revendication 1, dans lequel la tige télescopique (26) présente un seul degré de liberté en translation et peut être ajustée uniquement conformément audit degré de liberté en translation.

3. Dispositif de maintien (10) selon l'une des revendications précédentes, dans lequel le point d'appui thoracique repose sur une région de poitrine antérieure, et le dispositif de maintien (10) comprend un mécanisme d'adaptation de longueur (40) de telle sorte qu'une distance entre la section pour cou (24) et le point d'appui thoracique est variable, dans lequel le mécanisme d'adaptation de longueur (40) est conçu par au moins un premier et un second élément partiel du premier composant (20) dont la longueur combinée peut être modifiée et peut être bloquée par un mécanisme d'encliquetage.

4. Dispositif de maintien (10) selon la revendication 3, dans lequel le mécanisme d'adaptation de longueur (40) est conçu dans une section parmi la section pour épaule (23) et la section pour thorax (22) du premier composant (20).

5. Dispositif de maintien (10) selon l'une des revendications précédentes, dans lequel la sangle pour poitrine (46) est amovible et/ou dans lequel l'accouplement de la première et de la seconde extrémité (47, 48) de la sangle pour poitrine (46) au premier composant (20) est conçu respectivement au moyen d'un mécanisme d'encliquetage.

6. Dispositif de maintien (10) selon l'une des revendications précédentes, dans lequel la sangle pour poitrine (46) est conçue pour relier la section pour cou (24) à la section pour thorax (22) en passant sous une articulation d'épaule.

7. Dispositif de maintien (10) selon l'une des revendications précédentes, comprenant en outre des moyens de reproduction de sons et/ou de reproduction d'images et/ou d'enregistrement de sons et/ou d'enregistrement d'images.

8. Dispositif de maintien (10) selon l'une des revendications précédentes, comprenant en outre un accumulateur d'énergie.

9. Dispositif de maintien (10) selon l'une des revendications précédentes, dans lequel au moins une section du premier composant (20) présente un revêtement sensiblement élastique et/ou anti-allergénique.

10. Dispositif de maintien (10) selon l'une des revendications précédentes, dans lequel au moins une section du premier composant (20) est fabriquée en un métal et/ou en aluminium.
